# EUROPÄISCHE PATENTSCHRIFT

(11) **EP 3 739 083 B1**
(45) Veröffentlichungstag und Bekanntmachung des Hinweises auf die Patenterteilung: **06.10.2021**
(21) Anmeldenummer: 20173820.0
(22) Anmeldetag: 11.05.2020
(51) Int. Cl.: C23F 11/02, C09K 15/06

(54) **ZUSAMMENSETZUNGEN UND VERFAHREN ZUR FREISETZUNG VON DAMPFPHASEN-KORROSIONSINHIBITOREN**
COMPOSITIONS AND METHOD FOR RELEASING VAPOUR PHASE CORROSION INHIBITORS
COMPOSITIONS ET PROCÉDÉ DE LIBÉRATION D'INHIBITEURS DE CORROSION EN PHASE VAPEUR

(30) Priorität: 13.05.2019 DE 102019112436
(43) Veröffentlichungstag der Anmeldung: 18.11.2020
(73) Patentinhaber: EXCOR Korrosionsforschung GmbH, 01067 Dresden (DE)
(72) Erfinder: Wowsnick, Gregor, 01067 Dresden (DE); Leitner, Bianka, 06258 Schkopau (DE); Faßbender, Frank, 01277 Dresden (DE); Hahn, Gerhard, 34346 Hann. Münden (DE)
(74) Vertreter: v. Bezold & Partner Patentanwälte - PartG mbB

(56) Entgegenhaltungen:
- US-A- 4 124 549
- US-A1- 2007 145 334
- US-A1- 2009 151 598

## Beschreibung

### Gebiet der Erfindung

Die vorliegende Erfindung betrifft Stoffkombinationen zur Freisetzung von DampfphasenKorrosionsinhibitoren (VCI) zum temporären Schutz von üblichen Gebrauchsmaterialien, wie Eisen aber auch Chrom, Nickel, Zinn, Zink, Aluminium, Kupfer und deren Legierungen. Als Reservoir und Trägermaterial dienen dabei typischerweise Polymere oder Polyolefin-Wachse, in welche diese Stoffe eingearbeitet werden.

### Hintergrund der Erfindung

Es ist bereits seit Jahrzehnten bekannt, dass feste und flüssige korrosionsinhibierende Stoffe, welche bereits bei Raumtemperatur einen erhöhten Dampfdruck aufweisen und damit zur Sublimation neigen zum vorwiegend temporären Schutz von metallischen Gegenständen vor Korrosion in geschlossenen Räumen, wie z.B. bei Verpackungen, bei Lagerung oder Transport verwendet werden können.

Unter anderem haben sich dabei als sehr verbreitete Stoffklassen etabliert [D. M. Bastidas, E. Cano, E. M. Mora, Anticorros. Method M., 52 (2002), 71-77]:
1) Primäre, sekundäre und tertiäre Amine, z.B. Ethanolamin, Cyclohexylamin oder Dicyclohexylamin;
2) Inhibitoren auf Nitritbasis, z.B. Natriumnitrit oder ähnliche Salze oder eine Kombination mit Stoffen aus 1 in ihrer Ammoniumform, z.B. Dicyclohexylammoniumnitrit [US2419327A];
3) Carbonsäuren bzw. deren Salze; die Säuren können dabei unterschiedlichste Reste tragen, z.B. Alkylgruppen, Arylgruppen oder weitere Funktionalitäten wie z.B. Alkohole, Ketone, Aldehyde, Amine, etc. Typische Vertreter sind die Benzoesäure und deren Salze sowie die Caprylsäure und deren Salze (Caprylate) [DE102007059726B4];
4) Triazole; ein weiterer verbreiteter Inhibitortyp, insbesondere zum Schutz von Kupfer, sind Triazole, besonders das Benzotriazol und seine substituierten Derivate. Verschiedene Literaturstellen beschreiben den effektiven Schutz von Metallen durch diese Verbindungen, insbesondere auch in Kombination mit Inhibitoren der voranstehend beschriebenen Gruppen [Yu. I. Kuznetsov, Int. J. Corros. Scale Inhib., 3 (2018) 271-307.

Zur Anwendung werden diese Stoffe oder Stoffgemische als VCI nicht mehr in reiner Form verwendet, sondern auf oder in Trägermaterialien beschichtet bzw. eingearbeitet. Dies beinhaltet zum Beispiel die Imprägnierung oder Beschichtung von cellulosebasierten Materialien (Papiere, Kartonagen, etc.) oder Beschichtung von Kunststoffen wie Vliese, Platten oder Schäume von PE, PP, PA oder Polyurethan mit VCI-haltigen Lösungen.

Eine weitere Anwendungsmöglichkeit ist die direkte Einarbeitung der flüchtigen Inhibitoren als Pulver in die Polymerschmelze von für sie durchlässige Kunststoffe wie Polyethylen, Polypropylen oder Polyvinylacetat (zum Beispiel beschrieben in US4290912A, DE2537232A1). Füllstoffe und Additive wie zum Beispiel Phenole, Ester oder Kieselsäuren werden dabei häufig als günstig für die Inhibitorfreisetzung und vorteilhaft für den Korrosionsschutz (z.B. in WO20030012170A1) beschrieben.

Ein großer Nachteil der beschriebenen und zur Zeit eingesetzten VCI-Systeme ist die nicht vermeidbare vorzeitige Freisetzung der enthaltenen VCI und damit einhergehend der Verlust eines Teils der Wirksamkeit in der späteren beabsichtigten Anwendung zum Korrosionsschutz in der Verpackung. Dies ist eine Folge der allen Systeme gemeinsame Eigenschaft des hohen Dampfdruckes der jeweiligen VCI, welche für die Anwendung auch grundsätzlich erforderlich ist.

Eine unerwünschte vorzeitige Abgabe von VCI wird insbesondere durch höhere Temperaturen gefördert. Dies ist beispielsweise der Fall bei Herstellung eines VCI-haltigen Compounds auf polymerer Basis durch Extrusion oder einer VCI-haltigen üblichen Polyethylenfolie, welche z.B. durch das Blasfolienverfahren hergestellt wird. Bei letzterem treten üblicherweise Temperaturen von mehr als 180 °C auf. Hinzu kommt die in der Praxis nicht zu vermeidende Lagerzeit, die ebenfalls einen möglichen Verlust an VCI generiert.

Dieser beschriebene Nachteil ist insbesondere gültig für flüchtige Carbonsäuren, zum Beispiel der Caprylsäure, der Benzoesäure u.ä., welche bei moderaten Temperaturen bereits einen so deutlichen Dampfdruck besitzen, dass sie in großer Geschwindigkeit vom VCI-haltigen Spendermaterial abgegeben werden. Je nach Konzentration im Spender verliert dieser demnach sehr schnell seine korrosionsinhibierende Wirkung abhängig von Zeit und Temperatur. Zur Modifikation des Dampfdruckes wurden in der Literatur bereits die Verwendung von flüchtigen Salzen dieser Verbindung beschrieben, wobei das wirksame VCI zweckmäßigerweise aus der Reaktion mit bekannten wirksamen Inhibitoren vorwiegend auf Basis von Aminen, beispielsweise Dicyclohexylamin, Benzotriazol oder Monoethanolamin [US4124549; DE2537232A1] gebildet wird.

Überraschend konnten diese Aufgaben erfindungsgemäß durch die Bereitstellung der Stoffkombination nach Anspruch 1 und des Verfahrens nach Anspruch 19 gelöst werden. Speziellere Aspekte und bevorzugte Ausführungsformen der Erfindung sind Gegenstand der weiteren Ansprüche.

### Beschreibung der Erfindung

Um dem oben beschriebenen raschen zeit- bzw. temperaturbedingten Abbau von leichtflüchtigen Carbonsäuren entgegenzuwirken, enthält die Stoffkombination der vorliegenden Erfindung als wirksame Hauptkomponente(n) mindestens ein nicht- oder nur schwerflüchtiges Carbonsäureanhydrid und zudem noch mindestens ein Salz einer flüchtigen Carbonsäure, welche korrosionsinhibierend wirkt.

In diesem Gemisch ist die über den atmosphärischen Pfad wirksame leichtflüchtige Carbonsäure zunächst nicht oder nur in Spuren vorhanden; vielmehr können erst nach hydrolytischer Spaltung des Anhydrides zwei Äquivalente einer Säure (oder ein Äquivalent einer Dicarbonsäure im Falle der Verwendung eines cyclischen Anhydrides) freigesetzt werden. Das Anhydrid und die durch Hydrolyse entstehenden Säuren sollen dabei schwer- oder nichtflüchtig sein, da die Freisetzung derselben in die Gasphase nicht gewünscht ist. Die freigesetzte Säure kann vielmehr im folgenden Schritt ihr Proton auf ein Salz einer flüchtigen Carbonsäure, d.h. ein Carboxylat, übertragen, sodass eine nunmehr flüchtige Carbonsäure freigesetzt wird, während das Salz der aus dem Anhydrid gebildeten Säure in der Polymermatrix zurückbleibt. Das zurückbleibende Carboxylat kann dabei wie in der Literatur beschrieben gegebenenfalls als Kontaktinhibitor wirken.

Der Vorteil dieses Ansatzes liegt darin, dass während der Herstellung der VCI-Spender, welche eine solche Stoffkombination umfassen oder daraus bestehen, und bei Lagerung unter möglichst trockenen Bedingungen stark flüchtige Komponenten im System nur in sehr geringem Maße gebildet werden. Wie schon oben erwähnt, muss der Bildung einer über den atmosphärischen Pfad wirksamen Carbonsäure zunächst die hydrolytische Spaltung des Anhydrides und ein anschließender Protonentransfer vorausgehen, welche Spaltung vor allem durch die Gegenwart von Wasser induziert wird, zum Beispiel bei hoher Luftfeuchtigkeit oder bei Unterschreitung eines Taupunktes, und welche gegebenenfalls durch erhöhte Umgebungstemperaturen beschleunigt wird. Diese Verpackungsmaterialien sind dann dazu fähig, den Inhibitor abhängig vom umgebenden Klima nachzuliefern. Somit tritt die korrosionsinhibierende Wirkung (Freisetzung der Carbonsäure) solch eines VCI-Spenders in erster Linie und vorteilhafterweise erst bei Bedarf, d.h. beim Einsatz unter korrosionsfördernden Umweltbedingungen, ein.

Demgemäß enthält eine erfindungsgemäße Stoffkombination zur stimulus-abhängigen Freisetzung von Dampfphasenkorrosionsinhibitoren gemäß Anspruch 1 mindestens die folgenden Komponenten:
(1) eine Matrix,
(2) mindestens ein symmetrisches oder asymmetrisches Carbonsäureanhydrid von mindestens einer ersten Carbonsäure, welche keine leichtflüchtige Carbonsäure ist,
(3) mindestens ein Salz von mindestens einer zweiten, leichtflüchtigen korrosionsinhibierenden Carbonsäure mit einem Dampfdruck von mindestens 1,3 x 10⁻⁵ Pa, vorzugsweise mindestens 1 x 10⁻⁴ Pa oder mindestens 1 x 10⁻³ Pa, bei 25°C,
wobei das Carbonsäureanhydrid der Komponente (2) ein nicht-flüchtiges oder relativ schwerflüchtiges Anhydrid mit einem Dampfdruck von niedriger als 1 x 10⁻² Pa, vorzugsweise niedriger als 1 x 10⁻³ Pa oder niedriger als 1 x 10⁻⁴ Pa, bei 25° C ist, und wobei die Stoffkombination in der Lage ist, bei Einwirkung des erforderlichen Stimulus, d.h. Gegenwart von H₂O, die erste(n) Carbonsäure(n) durch Hydrolyse des Anhydrids freizusetzen und die mindestens eine zweite Carbonsäure der Komponente (3) durch Protonentransfer von mindestens einer ersten Carbonsäure aus ihrem Salz freizusetzen, so dass mindestens eine korrosionsinhibierende leichtflüchtige Carbonsäure der Komponente (3) als Korrosionsinhibitor in der Dampfphase vorliegt.

Bei der Matrix handelt es sich erfindungsgemäß bevorzugt um eine Polymermatrix, ein PE-Wachs oder ein oxidiertes PE-Wachs.

Die Freisetzung der flüchtigen korrosionsinhibierenden Carbonsäure aus der Polymermatrix einer erfindungsgemäßen Stoffkombination ist vorteilhafterweise nicht nur von der Zeit unter offener Lagerung sondern primär von der Gegenwart des Stimulus, d.h. Wasser, typischerweise in Form einer erhöhten absoluten Luftfeuchtigkeit von mehr als 2 g/m³ vorzugsweise mehr als 5 g/m³ und noch bevorzugter mehr als 10 g/m³, abhängig, wobei die Freisetzungsrate von der Temperatur und von der Konzentration an Wasser, d.h. der absoluten Luftfeuchtigkeit in der die erfindungsgemäße Stoffkombination umgebenden Atmosphäre abhängig ist, und ist an folgende vorgelagerte Reaktionen gekoppelt:

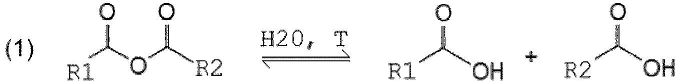

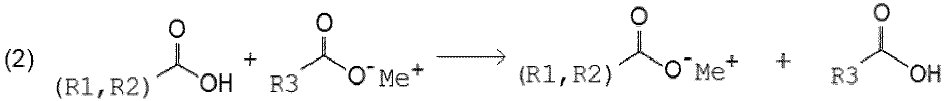

In diesen Gleichungen stehen R1, R2 und R3 für organische Reste und Me⁺ für ein Kation, z.B. ein Alkali-, Erdalkali- oder Ammoniumkation.

Die Reaktionen (1) und (2) erfordern sowohl eine Diffusion von Wasser durch die jeweilige Matrix, insbesondere eine (typischerweise hydrophobe) Polymermatrix, wie z.B. das besonders bevorzugte Polyethylen, oder ein (typischerweise hydrophobes) Polyolefin-Wachs, um die Hydrolyse des Anhydrides auszulösen, als auch einen Kontakt des Anhydrides oder der durch Hydrolyse entstehenden Säuren mit dem Carbonsäuresalz, obgleich diese Komponenten durch die feste Polymermatrix getrennt oder weitgehend getrennt sind. Die Diffusion des Wassers als auch die Migration des meist festen Anhydrides bzw. seiner meist festen Hydrolyseprodukte durch die feste Matrix zum festen Carbonsäuresalz sind unter anderem temperaturabhängig (wachsende Wasserdampfdurchlässigkeit, steigende Diffusionskonstanten). Überraschenderweise verläuft dieser Mechanismus trotz des fast immer festen Aggregatzustandes der Komponenten 1, 2 und 3 ausreichend gut und es konnte analytisch nachgewiesen werden, dass bis zu 80% des Carbonsäuresalzes (Komponente 3) abgebaut werden können. Die Reaktionstemperatur T liegt dabei typischerweise im Bereich von -20°C bis 80 °C, häufiger im Bereich von 0°C bis 60°C, wobei in diesem Temperaturbereich die Abbaugeschwindigkeit des Carbonsäuresalzes gewöhnlich mit der Temperatur steigt.

Die erfindungsgemäße Stoffkombination umfasst die Komponenten (1) bis (3) und die mindestens eine erste Carbonsäure der Komponente (2) ist keine leichtflüchtige Carbonsäure, womit die Freisetzung einer korrosionsinhibierenden leichtflüchtigen Carbonsäure bevorzugt oder ausschließlich gemäß der obigen Gleichgewichtsreaktion (2) erfolgt.

Das jeweilige Carbonsäureanhydrid der Komponente (2) kann von einer Carbonsäure gebildet werden (symmetrisches Anhydrid) oder von zwei verschiedenen Carbonsäuren (asymmetrisches Anhydrid). Es kann sich um ein cyclisches Anhydrid handeln, das von einem Molekül einer Dicarbonsäure, insbesondere von einer Dicarbonsäure, die einen 5-, 6- oder 7-gliedrigen Ring bilden kann, gebildet wird, oder um ein acyclisches Anhydrid, das von zwei Molekülen einer Carbonsäure gebildet wird. Die Carbonsäuren können gesättigte oder ungesättigte, verzweigte oder unverzweigte aliphatische Säuren, oder aromatische oder heteroaromatische Carbonsäuren sein. Die Carbonsäuren können unsubstituiert sein oder gegebenenfalls auch Substituentengruppen, vorzugsweise Hydroxy- oder Aminosubstituenten tragen.

Das Carbonsäureanhydrid kann insbesondere aus der Gruppe ausgewählt sein, welche Myristinsäureanhydrid, Naphthalsäureanhydrid, insbesondere 1,8-Naphthalsäureanhydrid, 2,3-Naphthalsäureanhydrid und 1,4,5,8-Naphthalintetracarbonsäureanhydrid, Diphensäureanhydrid, Isatosäureanhydrid, Pyromellitsäureanhydrid, Mellitsäureanhydrid oder asymmetrische gemischte Anhydride der genannten Carbonsäuren umfasst.

Vorzugsweise ist das Carbonsäureanhydrid ein nicht-flüchtiges oder relativ schwerflüchtiges Anhydrid mit einem Dampfdruck von niedriger als 1 x 10⁻² Pa, bevorzugter niedriger als 1 x 10⁻³ Pa, besonders bevorzugt niedriger als 1 x 10⁻⁴ Pa bei 25° C.

Leichter flüchtige Anhydride mindern einerseits den erfindungsgemäßen Vorteil, die Wirkstoffe nur unter Korrosionsbedingungen in die Dampfphase freizusetzen, und andererseits sind leichtflüchtige Anhydride häufig mehr oder weniger stark reizend für Augen, Haut und Schleimhäute und daher für die Herstellung der korrosionsinhibierenden Stoffkombinationen und Spendermaterialien unter erhöhten Temperaturen oder auch während der Endanwendung aus gesundheitlichen Gründen weniger empfehlenswert weswegen eine merkliche Freisetzung bzw. Sublimation des Anhydrides in die Gasphase ausdrücklich nicht erwünscht ist.

In der oben beschriebenen Ausführungsform, bei der alle Komponenten (1)-(3) in der erfindungsgemäßen Stoffkombination vorliegen, werden aus dem Carbonsäureanhydrid typischerweise schwerflüchtige Säuren (oder eine schwerflüchtige Dicarbonsäure im Falle der Verwendung eines cyclischen Anhydrids) freigesetzt. Diese Säure kann nun in einer nachgeschalteten Reaktion ihr Wasserstoffion gegen das Kation des Salzes einer flüchtigen Carbonsäure (Komponente (3) mit korrosionsinhibierenden Eigenschaften austauschen. Die gebildete flüchtige Carbonsäure kann den Spender verlassen, während ein Salz der durch Hydrolyse des Anhydrids gebildeten Carbonsäure oder Dicarbonsäure zurückbleibt.

In einer bevorzugten Ausführungsform der Erfindung, bei der die durch Hydrolyse gebildete (Di)-Carbonsäure vorzugsweise aus der Gruppe der Alkansäuren, wie z.B. Myristinsäure, oder der Gruppe der aromatischen Dicarbonsäuren, welche aus cyclischen Anhydriden entstehen, wie z.B. 1,8-Naphthaldicarbonsäure, ausgewählt ist, vermag die Carbonsäure oder Dicarbonsäure oder insbesondere das gebildete (Di)-Carbonsäuresalz zudem als Kontaktinhibitor zu wirken.

Die Bildung des kontaktinhibierenden Carbonsäuresalzes nach der Extrusion bietet den weiteren erfindungsgemäßen Vorteil, dass das Salz in sehr feinverteilter Form in der Matrix vorliegt, da die Edukte auf molekularer Ebene in der Matrix reagieren. Eine feine Verteilung des Kontaktinhibitors ist notwendig für einen flächendeckenden Kontaktkorrosionsschutz. Dies muss bei direkter Zugabe eines salzförmigen Kontaktinhibitors durch vorherige feine Mahlung (unter Verhinderung von Reagglomeration der Partikel) erreicht werden, da einzelne Salzkristallite auch während der Extrusion nicht zerkleinert werden können.

Das Salz der Komponente (3) ist grundsätzlich nicht besonders beschränkt. Vorzugsweise handelt es sich dabei jedoch um mindestens ein Alkali-, Erdalkali- oder Ammoniumsalz einer leichtflüchtigen korrosionsinhibierenden Carbonsäure mit einem Dampfdruck von mindestens 1 x 10⁻⁵ Pa oder 1,3 x 10⁻⁵ Pa, bevorzugt mindestens 1 x 10⁻⁴ Pa, oder besonders bevorzugt mindestens 1 x 10⁻³ Pa, bei 25°C, die insbesondere aus der Gruppe ausgewählt ist, welche gesättigte und ungesättigte, unsubstituierte Alkansäuren mit 6-14 Kohlenstoffatomen, gesättigte und ungesättigte Alkansäuren mit 3-6 Kohlenstoffatomen, welche Amino- bzw. Hydroxylsubstituenten tragen, und aromatische oder heteroaromatische Carbonsäuren mit 6-14 Kohlenstoffatomen, insbesondere Benzoesäure, alkylsubstituierte Benzoesäure-Derivate, wie ortho-, meta- und para-Toluolsäure, Amino- oder Hydroxy-substituierte Benzoesäure-Derivate, Furan-2-Carbonsäure oder Furan-3-Carbonsäure, umfasst.

Die (potentiellen) Wirkstoffkomponenten (2) und (3) sind erfindungsgemäß in einer Matrix, spezieller in einer Polymermatrix oder Polyolefin-Wachs-Matrix, inkorporiert, um die homogene und fein dispergierte Verteilung der Wirkstoffkomponenten in der erfindungsgemäßen Stoffkombination sicherzustellen.

Im Falle einer Polymermatrix kann diese ein oder mehrere Polymere, insbesondere extrusionsfähige Polymere, enthalten.

In spezielleren Ausführungsformen ist/sind diese(s) Polymer(e) aus der Gruppe ausgewählt, die polyolefinische Polymere, Styrolpolymere, Polyamide, Polyurethane, Polyester, Polyvinylchlorid, und biologisch abbaubare Polymere, wie z.B. Polylactide, Polybutylenadipatterephtalat, Polyhydroxybuttersäure, umfasst.

Allgemein werden vorzugsweise solche Polymere, insbesondere polyolefinischen Polymere, ausgewählt werden, die einerseits eine stabile Granulatform nach der Einarbeitung der VCI-Komponenten garantieren und andererseits eine gute Einarbeitbarkeit, gute Dispergierung und Homogenität der VCI-Komponenten durch eine starke Verträglichkeit bzw. Affinität der Polymermatrix des Masterbatches zum Matrixmaterial des Endproduktes ermöglichen.

Der Begriff "polyolefinische Polymere" wie hier verwendet, umfasst sowohl Polyolefin-Homopolymere als auch Copolymere von Olefinmonomeren mit Monomeren anderer Olefine oder mit Monomeren anderer polymerisationsfähiger organischer Moleküle, wie z.B. Vinylacetat, Styrol, Acrylate und Methacrylate. Ein breites Spektrum solcher polyolefinischen Polymere sind im Handel erhältlich.

Spezielle, nicht beschränkende Beispiele für geeignete polyolefinische Polymere sind Polyethylen, Polypropylen, Ethylenvinylacetat (EVA), Ethylen-Butylacrylat-Copolymer (EBA), Ethylen-Octen-Copolymer, Ethylen-Propylen-Copolymer.

Styrolpolymere können Homopolymere oder Copolymere mit Monomeren anderer polymerisationsfähiger organischer Moleküle, wie z.B. Vinylacetat, Olefine, Acrylate und Methacrylate, insbesondere Styrol-Block-Copolymere wie zum Beispiel Styrol-Butadien-Copolymer, ABS, SAN, ASA, sein.

Eine Ausführungsform der erfindungsgemäßen Stoffkombination betrifft sogenannte Masterbatches, welche die Wirkstoffkomponenten in relativ hoher Konzentration enthalten und welche mit einem oder mehreren weiteren Polymer(en) gemischt und zur Herstellung von Endprodukten mit einem höheren Anteil an Polymermatrix verwendet werden können.

Solche Polymere zur Mischung mit einem Masterbatch sind vorzugsweise aus der Gruppe ausgewählt, welche Polyolefine, z.B. Polyethylen oder Polypropylen oder deren Copolymere, Polystyrole und deren Copolymere, Polyamide und deren Copolymere, Polyurethane und deren Copolymere, Polyester und deren Copolymere, Polyvinylchloride oder Polylactide und Polyhydroxybuttersäure umfasst.

Hierbei werden die Polymere des Masterbatches und die später zugesetzten Polymere vorzugsweise hinsichtlich der gegenseitigen Verträglichkeit und entsprechend den jeweiligen Endproduktanforderungen auf einander abgestimmt.

Beispielsweise werden polyolefinische Polymere des Masterbatches häufig mit einem oder mehreren weiteren polyolefinischen Polymer(en), z.B. Polyethylen, Polypropylen etc., gemischt.

Einige, nicht beschränkende, typische Beispiele für solche polyolefinischen Polymere des Masterbatches sind z.B. Polyethylen (PE), Ethylencopolymere wie LLDPE (typischerweise < 15 Masse-% C3- bis C8-Olefine) oder POE (typischerweise mit 15-20 Masse-% C3- bis C8-Olefinen) oder Ethylencopolymere mit einem einpolymerisierten Vinylacetat-Anteil (typischerweise >= 40 Masse-%), Butylacrylat-Anteil (typischerweise <=25 Masse-%) oder (Meth)Acrylsäure(ester)-Anteil (typischerweise >= 15 Masse-%) und Polypropylen (PP) oder analoge Propylencopolymere, z.B. Ethylen-Propylen-Blockcopolymer.

Andere typische Masterbatch-Formulierungen umfassen Polymere, welche aus den folgenden Gruppen ausgewählt sind:
- Styrol-Block-Copolymere, wie zum Beispiel Styrol-Butadien-Copolymer zur Einarbeitung in (bzw. Mischung mit) Polystyrol und dessen Copolymere wie ABS, SAN, ASA;
- in Polyamide und deren Copolymere einarbeitbare (bzw. damit mischbare) Matrixmaterialien, insbesondere thermoplastische Elastomere und dort speziell die Gruppe der TPE-Amide;
- in Polyurethane einarbeitbare (bzw. damit mischbare) Matrixmaterialien, insbesondere thermoplastische Elastomere und dort speziell die Gruppe der TPE-U;
- in Polyester einarbeitbare (bzw. damit mischbare) Matrixmaterialien, insbesondere thermoplastische Elastomere und dort speziell die Gruppe der TPE-E;
- in Polyvinylchloride einarbeitbare (bzw. damit mischbare) Matrixmaterialien, insbesondere polyolefinische Polymere, die eine hohe Affinität zu PVC besitzen;
- biologisch abbaubare Polymere, wie z.B. Polylactide, Polybutylenadipatterephtalat, Polyhydroxybuttersäure.

In einer anderen Ausführungsform kann als Matrix der Komponente 1 ein Polyolefin-Wachs eingesetzt werden, welches dann als Bindemittel die Matrix darstellt. In diesem Fall muss keine Extrusion stattfinden und das Gemisch kann zum Beispiel in gepresster Form verwendet werden.

Grundsätzlich sind als Matrix sowohl unpolare als auch polare Polyolefin-Wachse, insbesondere Polyethylen-Wachse, geeignet. Polare Polyolefin-Wachse können beispielsweise durch Oxidation von unpolaren Polyolefin-Wachsen, z.B. mit Luftsauerstoff, erhalten werden. Diese polaren Polyolefin-Wachse sind in der Regel Gemische von kurzkettigeren Polymersträngen, welche durch oxidative Spaltung der unpolaren Wachse erhalten wurden, und enthalten typischerweise z.B. Carbonyl-, Carboxyl-, Hydroxy- oder Ester-Gruppen, wobei die Menge von Carboxylgruppen durch die Säurezahl bestimmt werden kann.

Vorzugsweise wird/werden ein Polyethylen-Wachs mit der allgemeinen Struktur H(CH₂-CH₂)_{X}H, wobei x eine ganze Zahl ist, die den Polymerisationsgrad angibt (typischerweise < 700), und einer mittleren Molmasse von 3.000 bis 20.000 g/mol, vorzugsweise 3.500-10.000 g/mol, oder oxidierte, polarere Derivate eines solchen Polyethylenwachses für die erfindungsgemäße Stoffkombination verwendet. In einer bevorzugten Ausführungsform hat das erfindungsgemäß verwendete Polyethylenwachs eine kinematische Viskosität von mindestens 11 x 10⁻⁶ m²/s bei 100 °C.

Besonders vorteilhaft für die erfindungsgemäße Stoffkombination sind polare Polyolefin-Wachse, insbesondere Polyethylen-Wachse, mit einer Säurezahl von 0 bis 20.

Die erfindungsgemäße Stoffkombination kann neben den Komponenten (1) bis (3) zusätzlich noch weitere Zusatz- oder Hilfsstoffe, insbesondere bereits als Korrosionsinhibitoren, vorzugsweise Dampfphasenkorrosionsinhibitoren, eingeführte Substanzen einzeln oder als Gemisch derselben, enthalten.

Solche zusätzlichen Korrosionsinhibitoren können beispielsweise Triazole (z.B. Benzotriazol und substituierte Derivate davon) oder leichtflüchtige korrosionsinhibierende Carbonsäuren mit einem Dampfdruck von mindestens 1,3 x 10⁻⁵ Pa, vorzugsweise mindestens 1 x 10⁻³ Pa, bei 25°C wie oben definiert sein.

Eine zusätzliche leichtflüchtige korrosionsinhibierende Carbonsäure kann insbesondere aus der Gruppe ausgewählt sein, welche gesättigte und ungesättigte, unsubstituierte Alkansäuren mit 6-14 Kohlenstoffatomen, gesättigte und ungesättigte Alkansäuren mit 3-6 Kohlenstoffatomen, welche Amino- bzw. Hydroxylsubstituenten tragen, und aromatische oder heteroaromatische Carbonsäuren mit 6-14 Kohlenstoffatomen, insbesondere Benzoesäure, alkylsubstituierte Benzoesäure-Derivate, wie ortho-, meta- und para-Toluolsäure, Amino- oder Hydroxy-substituierte Benzoesäure-Derivate, Furan-2-Carbonsäure oder Furan-3-Carbonsäure, umfasst.

Weitere mögliche Hilfsstoffe sind beispielsweise Stabilisatoren, z.B. Phosphite oder Phenole, oder Additive und Füllstoffe wie zum Beispiel Kieselsäure oder Farbpigmente.

Eine spezielle Ausführungsform der erfindungsgemäßen Stoffkombination umfasst die folgenden Komponenten:
Komponente (1) mit einem Anteil im Bereich von 55 bis 99,5 Gew.- %, bzw. 10 bis 99.5 Gew.-% falls es sich um ein Wachs handelt und die Stoffkombination nicht extrudiert werden muss,
Komponente (2) mit einem Anteil im Bereich von 100 bis 300.000 ppm, bzw. 100 bis 400.000 ppm falls es sich bei Komponente 1 um ein Wachs handelt und die Stoffkombination nicht extrudiert werden muss, vorzugsweise 1000 bis 200.000 ppm, bevorzugter 50.000 bis 200.000 ppm und noch bevorzugter 50.000 bis 150.000 ppm,
Komponente (3) mit einem Anteil im Bereich von 2.000 ppm bis 300.000 ppm, bzw. 2.000 ppm bis 800.000 ppm falls es sich bei Komponente 1 um ein Wachs handelt und die Stoffkombination nicht extrudiert werden muss, vorzugsweise 10.000 bis 300.000 ppm, bevorzugter 20.000 bis 200.000 ppm und noch bevorzugter 100.000 bis 200.000 ppm, und gegebenenfalls weitere Zusatz- oder Hilfsstoffe mit einem Anteil im Bereich von 10 bis 100.000 ppm, vorzugsweise 1000 ppm bis 100.000 ppm, bevorzugter 20.000 bis 100.000 ppm,
jeweils bezogen auf die Gesamtmenge der Stoffkombination.

Diese Ausführungsform der Stoffkombination enthält die potentiellen Wirkstoffkomponenten in relativ hohen Anteilen und kann entweder als solche, gegebenenfalls nach dem Bringen in eine gewünschte Form direkt als VCI-Korrosionsschutzprodukt, oder als "Masterbatch", d.h. als konzentriertes Ausgangsprodukt, mit einem oder mehreren weiteren Polymer(en) gemischt und zur Herstellung von Endprodukten mit einem höheren Anteil an Polymermatrix verwendet werden.

Eine spezielle Ausführungsform der erfindungsgemäßen Stoffkombination, typisch für die oben genannten Endprodukte, umfasst die folgenden Komponenten:
Komponente (1) mit einem Anteil im Bereich von 95 bis 99,95 Gew.-%,
Komponente (2) mit einem Anteil im Bereich von 10 bis 30.000 ppm, vorzugsweise 600 bis 15.000 ppm, noch bevorzugter 1000 ppm bis 8000 ppm,
Komponente (3) mit einem Anteil im Bereich von 10 ppm bis 30.000 ppm, vorzugsweise 1.000 bis 25.000 ppm, noch bevorzugter 2000 bis 8000 ppm,
und gegebenenfalls weitere Zusatz- oder Hilfsstoffe mit einem Anteil im Bereich von 10 bis 25.000 ppm, jeweils bezogen auf die Gesamtmenge der Stoffkombination.

Hier umfasst die Komponente (1) auch diejenigen Polymere, welche der ursprünglichen Zusammensetzung des Masterbatches zugemischt wurden.

Solche Polymere zur Mischung mit einem Masterbatch sind vorzugsweise aus der Gruppe ausgewählt, welche Polyolefine, z.B. Polyethylen oder Polypropylen oder deren Copolymere, Polystyrole und deren Copolymere, Polyamide und deren Copolymere, Polyurethane und deren Copolymere, Polyester und deren Copolymere, Polyvinylchloride und Polylactide, Polybutylenadipatterephtalat und Polyhydroxybuttersäure umfasst.

Die erfindungsgemäßen Stoffkombinationen können in vielfältiger Form, beispielsweise in Form einer Pulvermischung, eines Presslings, eines extrudierten Stranges, eines Granulats, einer Folie, typischerweise mit einer Dicke im Bereich von 10 bis 400 µm, oder eines anderen Formkörpers, oder als Komponente in einem Kompositmaterial, insbesondere als Verbundfolie oder Laminat auf einem Trägermaterial, vorliegen.

Ein weiterer Aspekt der vorliegenden Erfindung umfasst Verfahren zur Herstellung und gegebenenfalls Formung der erfindungsgemäßen Stoffkombinationen.

Ein typisches Verfahren zur Herstellung einer erfindungsgemäßen Stoffkombination umfasst mindestens die folgenden Schritte:
- Herstellen einer Mischung, die a) ein extrusionsfähiges Polymer oder eine extrusionsfähige Polymermischung, b) das Carbonsäureanhydrid der Komponente (2) oder die entsprechende(n) erste(n) Carbonsäure(n), c) das Salz der Komponente (3), und d) gegebenenfalls weitere Zusatz- oder Hilfsstoffe umfasst,
- Extrudieren der erhaltenen Mischung bei einer Temperatur im Bereich von typischerweise 90-250°C zu einem Masterbatch.

Eine weitere typische Ausführungsform dieses Verfahrens umfassend ferner mindestens den Schritt der Weiterverarbeitung des Masterbatches, gegebenenfalls nach Mischen mit einem weiteren schmelz- bzw. extrusionsfähigen Polymer oder einer weiteren schmelz- bzw. extrusionsfähigen Polymermischung, zu einem Endprodukt in einer gewünschten Form, z.B. einem gewickelten Strang, einem Granulat, einer Folie oder einem Spritzgussteil.

Bei diesem Weiterarbeitungsschritt kann das Masterbatch oder eine Mischung des Masterbatches mit einem weiteren extrusionsfähigen Polymer beispielsweise einer Blasfolienextrusion unterworfen werden, wodurch eine Folie mit einem gewünschten Durchmesser hergestellt wird, oder mittels anderer Verfahren wie Profil-Extrusion, Spritzguss-Verfahren, Tiefzieh-Verfahren, Blasform-Verfahren, Laminierung bei Temperaturen von 50 bis 250 °C weiterverarbeitet und in eine gewünschte Form gebracht werden.

In einer speziellen Ausführungsform des Verfahrens zur Herstellung einer erfindungsgemäßen Stoffkombination wird das Carbonsäureanhydrid der Komponente (2) *in situ* durch eine Cyclisierungsreaktion von mindestens einer ersten Dicarbonsäure der Komponente (2) bei der Extrusion oder Blasextrusion der zu extrudierenden Mischung bei einer Temperatur zwischen 50°C bis 300°C, insbesondere im Bereich von 80°C bis 250 °C, gebildet. Für diese Ausführungsform geeignete Dicarbonsäuren sind z.B. 1,8-Naphthaldicarbonsäure, 2,3-Naphthaldicarbonsäure.

Eine andere spezielle Ausführungsform beinhaltet die Coextrusion eines extrusionsfähigen Polymers z.B. mittels Blasfolienextrusion insbesondere zum Erhalt mehrschichtiger Folien. Dabei können für die Schichten abwechselnd unterschiedliche Masterbatche verwendet werden, wobei diese jeweils eine grundsätzliche Zusammensetzung im Rahmen obiger Beschreibung aufweisen. Allerdings sind die Verhältnisse zwischen dem Anhydrid (Komponente 2) und dem Carbonsäuresalz (Komponente 3) verschieden, und zwar vorzugsweise so, dass bei einem Masterbatch das Anhydrid im stöchiometrischen Überschuss vorhanden ist, während bei dem zweiten Masterbatch das Carbonsäuresalz im stöchiometrischen Überschuss vorliegt (da ein Anhydridmolekül zwei Carbonsäuremoleküle freisetzen kann, beträgt die Stöchiometrie bezogen auf die Stoffmenge 1:2). Wenn so verfahren wird, kann in beiden Schichten auch in Gegenwart von Wasser vorerst nur ein Teil der jeweils im Überschuss zugesetzten Komponente entsprechend den beschriebenen Reaktionsgleichungen 1 und 2 abreagieren (und zwar abhängig von der Menge der nichtstöchiometrisch zugesetzten Komponente). Verbliebenes Anhydrid oder die durch Hydrolyse entstandene (Di)-Carbonsäure aus einer Schicht muss nun erst durch das Polymer in die zweite Schicht migrieren. Diese Diffusion ist zusätzlich temperaturabhängig und, abhängig von den Schichtdicken, wird die final wirksame leichtflüchtige Carbonsäure auch bei klimatisch anspruchsvollen Bedingungen langsamer und über einen noch größeren Zeitraum freigegeben, während bei Raumtemperatur oder leicht erhöhter Temperatur unter 40°C kaum Migration stattfindet und somit auch kaum die flüchtige Carbonsäure gebildet wird. Deshalb ist es auch nicht empfehlenswert, beide Komponenten komplett (z.B. in verschiedenen Schichten) voneinander zu trennen, da solche Folien unter moderaten klimatischen Bedingungen wie z.B. 25°C fast nur die VCI abgeben können, welche während oder kurz nach dem Extrusionsprozess durch Anwesenheit von Spuren von Wasser bzw. kurzzeitigem Kontakt mit Luftfeuchtigkeit an den Schichtgrenzflächen gebildet wurde.

Die Konzentration an Komponenten, über alle Schichten der Folien addiert, liegt letztlich wieder innerhalb des bereits angegebenen Bereiches bei Verwendung von nur einem Masterbatch.

In einer anderen speziellen Ausführungsform, bei welcher die Matrix der Komponente (1) ein Polyolefin-Wachs, insbesondere ein Polyethylenwachs oder ein oxidiertes Polyethylenwachs, umfasst oder darstellt, umfasst ein typisches Verfahren zur Herstellung einer erfindungsgemäßen Stoffmischung, mindestens die folgenden Schritte:
- Herstellen der Mischung aller Komponenten,
- Mechanisches Verdichten zu einem Pressling, optional unter kurzzeitiger Erwärmung bis zu 100 °C.

Ein weiterer Aspekt der vorliegenden Erfindung betrifft ein Verfahren zur stimulus-abhängigen Freisetzung von Dampfphasenkorrosionsinhibitoren, umfassend:
die Bereitstellung einer erfindungsgemäßen Stoffkombination, welche mindestens enthält:
   (1) eine Polymermatrix oder ein Polyolefin-Wachs oder oxidiertes Polyolefin-Wachs,
   (2) mindestens ein symmetrisches oder asymmetrisches Carbonsäureanhydrid von mindestens einer ersten Carbonsäure, welche keine leicht-flüchtige Carbonsäure ist,
   (3) ein Salz von mindestens einer zweiten, leichtflüchtigen korrosionsinhibierenden Carbonsäure mit einem Dampfdruck von mindestens 1,3 x 10⁻⁵ Pa, vorzugsweise mindestens 1 x 10⁻⁴ Pa oder 1 x 10⁻³ Pa, bei 25°C,
wobei das Carbonsäureanhydrid der Komponente (2) ein nicht-flüchtiges oder relativ schwerflüchtiges Anhydrid mit einem Dampfdruck von niedriger als 1 x 10⁻² Pa, vorzugsweise niedriger als 1 x 10⁻³ Pa oder niedriger als 1 x 10⁻⁴ Pa, bei 25° C ist, und
   - Hydrolyse des Carbonsäureanhydrids der Komponente (2) in Gegenwart des Stimulus H₂O, wodurch mindestens eine erste Carbonsäure freigesetzt wird und die mindestens eine zweite Carbonsäure der Komponente (3) durch Protonentransfer von mindestens einer ersten Carbonsäure aus ihrem Salz freigesetzt wird,
so dass mindestens eine korrosionsinhibierende leichtflüchtige Carbonsäure der Komponente (3) als Korrosionsinhibitor in der Dampfphase vorliegt.

Die Geschwindigkeit der Hydrolyse hängt dabei sowohl von der Konzentration des Stimulus H₂O, d.h. der absoluten Luftfeuchte (typischerweise mindestens 2 g/m³, vorzugsweise mindestens 5 g/m³ und noch bevorzugter mindestens 10 g/m³) als auch von der Temperatur (typischerweise im Bereich von -20°C bis + 80°C, häufiger im Bereich von 0°C bis 60°C) ab.

Die erfindungsgemäßen Stoffkombinationen werden vor allem verwendet, um die breite Palette der üblichen Gebrauchsmetalle, wie Eisen, Zink, Chrom, Nickel, Aluminium, Kupfer, Blei, Zinn, Magnesium, Silber, und deren Legierungen und Kombinationen, einschließlich verzinkter, verzinnter, verchromter, vernickelter, versilberter, verkupferter Stähle oder anderer der obengenannten Metalle, in Verpackungen und während der Lagerung in geschlossenen Räumen vor atmosphärischer Korrosion zu schützen.

Dementsprechend betrifft ein weiterer Aspekt der Erfindung die Verwendung einer erfindungsgemäßen Stoffkombination zum Korrosionsschutz von üblichen Gebrauchsmetallen, wie Eisen, Zink, Chrom, Nickel, Aluminium, Kupfer, Blei, Zinn, Magnesium, Silber, und deren Legierungen oder Kombinationen, insbesondere innerhalb von Verpackungs-, Lagerungs- und Transportvorgängen.

Besonders bevorzugt werden die erfindungsgemäßen Stoffkombinationen zum Schutz von Eisen, Zink, Aluminium und Kupfer und deren Legierungen und Kombinationen verwendet.

Der Begriff Kombinationen, wie hier verwendet, soll insbesondere mechanische Kombinationen von Metallen, beispielsweise zusammengeschraubte, gelötete, oder geschweißte Metallteile, sowie plattierte oder überzogene Basismetalle, beispielweise verzinkte, verzinnte, verchromte, vernickelte, versilberte, verkupferte Stähle oder andere der obengenannten Metalle einschließen.

Der Anmeldungsgegenstand wird durch die nachfolgenden Beispiele näher erläutert.

### BEISPIELE

Zu Herstellung von VCI-Spendern als Granulat oder als Folie wurde wie folgt verfahren: Aus den erfindungsgemäßen Gemischen wurden in einem Doppelschneckenextruder bei Temperaturen von 110 °C - 180 °C ein Masterbatch extrudiert und anschließend granuliert. Der Massedruck betrug zwischen 50 und 100 bar. Der Strang wurde im Wasserbad gekühlt und anschließend über ein Rundmesser granuliert.

Zur Testung von konzentrierten Spendern wurde 1 g Granulat in einem Tyvekbeutel verschweißt. Zur Herstellung von Folien wurde in einem Blasfolienextruder 2,5% des jeweiligen Masterbatch-Granulates mit einem gängigen LDPE (DOW LDPE 310E) vermischt und bei Temperaturen zwischen 170 und 210 °C zu einer Blasensäule extrudiert. Die Foliendicke wurde auf 100 ± 5 µm eingestellt.

### Beispiel 1:

Aus einem Gemisch von:
15 Gew.-% 1,8-Naphthalsäureanhydrid
10 Gew.-% Natriumcaprylat
1,5 Gew.-% Stabilisator (Irgafos 168)
0,75 Gew.-% Stabilisator (Irganox 1010)
72,75 Gew.-% LDPE
wurde ein Masterbach extrudiert und in einem Tyvekbeutel verschlossen und einem dynamischen zyklischen Übersee-Klima nach DIN EN 60068-2-30 unterworfen. Auch nach einer Woche Alterung unter diesen harschen Bedingungen zeigte das Granulat im anschließenden Test nach TL 8135-0002 noch einen exzellenten Korrosionsschutz.

Weiterhin wurde aus dem Masterbatch unter den genannten Bedingungen eine Folie hergestellt. Zudem wurde ein Referenzbatch und daraus eine Referenzfolie hergestellt, welche unter sonst völlig analogen Bedingungen folgende Zusammensetzung im Masterbatch hatte:
10% Caprylsäure
10% Sipernat S22S
1,5% Stabilisator Irgafos 168
0,75% Stabilisator Irganox 1010
77,75% LDPE

Die Folie mit dem Gemisch aus 1,8-Naphtalsäureanhydrid und Natriumcaprylat wurde hinsichtlich ihres Korrosionsschutzes im frischen Zustand sowie nach offener Lagerung im Raumklima für 3 sowie 14 Tage mittels Test nach TL 8135-0002 untersucht und mit einer Referenz-Folie verglichen, welche neben LDPE, den Stabilisatoren noch zusätzlich 10% Caprylsäure enthielt. Ergebnis: Beide Folien zeigen ausgezeichneten Korrosionsschutz im frischen Zustand (keinerlei Korrosionspunkte sichtbar), der für die anhydridhaltige Folie sowohl nach 3-tägiger als auch nach 14-tägiger Auslagerung noch im ausreichenden Maß vorhanden war (nur schwache sichtbare Korrosionspunkte). Im Unterschied dazu liefert die lediglich auf Caprylsäure basierende Folie bereits nach 3 Tagen nur noch einen sehr schwachen, keinesfalls hinreichenden Korrosionsschutz, welcher nach 14 Tagen Auslagerung völlig verschwindet (in diesem Fall ist der Prüfkörper sehr stark und ganzflächig korrodiert entsprechend einer VCI-freien Referenz).

Dieser Test wurde ebenso mit Folien durchgeführt, welche vorher einer sehr harschen Alterung unterzogen waren durch offene Auslagerung in einem klimatisierten Schrank bei 55 °C und 34% relativer Luftfeuchte unter stetiger Frischluftzufuhr/Umwälzung. Hierbei zeigte sich bei der auf Caprylsäure basierenden Folie bereits, dass diese bereits nach 1h unter diesem Klima keine hinreichende Korrosionsschutzwirkung mehr besaß, und nach 4h und 8h Aushängen völlig versagte (flächige starke Korrosion des Prüfkörpers) während die anhydridhaltige Probe noch nach bis zu 8h vollends ausreichenden Schutz bot. Selbst nach 72h unter diesem Klima war noch eine deutliche Korrosionsschutzwirkung durch den TL-Test nachweisbar auch wenn hier bereits erste lokale Rostflecken zu beobachten waren und unter diesen harschen Alterungsbedingungen einen nachlassenden aber noch vorhandenen Schutz signalisiert. Proben dieser Folie wurden weiterhin 72h bei 55 °C und einer absoluten Luftfeuchte von 10 und 73 g/m³ (entspricht bei dieser Temperatur einer relativen LF von 10% und 70%) gealtert und danach mittels des Tests nach TL 8135-0020 untersucht. Hierbei zeigte sich, dass die Folie, welche unter dem feuchtesten Klima gealtert wurde, keinerlei Korrosionsschutz mehr aufwies, während die Folie, welche unter dem trockensten Klima ausgelagert wurde, einen hinreichenden Korrosionsschutz (mit nur sehr kleinen, lokalen Korrosionspunkten) aufwies. Dies zeigt, dass der flüchtige Wirkstoff im feuchten, korrosiven Klima wesentlich schneller abgegeben wurde. Diese Experimente zeigen eindeutig, dass diese auf dem System Naphthalsäureanhydrid/Caprylat basierenden Folien den wirksamen, normalerweise sehr flüchtigen Korrosionsinhibitor sehr langsam und kontrollierter abzugeben vermögen.

Zur Untersuchung des Kontaktschutzes wurden Bleche aus Baustahl eng in Folie eingeschweißt und weiterhin mit 10 ml H₂O versetzt und danach am oberen Ende dicht zugeschweißt, sodass der Probenkörper teils im engen Kontakt zur Folie stand und teils von Wasser im unteren bzw. in Luft im oberen Bereich umgeben war. Der Probenkörper wurde nun einem zyklischen Klimatest nach DIN EN 60068-2-30 unterworfen und mit einer VCI-freien Referenz verglichen. In einem Tauchtest in Wasser innerhalb einer entsprechend gewählten Folie zeigten sich erste korrosive Punkte unter diesen äußerst korrosiven Bedingungen auf dem Stahl-Blech innerhalb einer VCI-freien Referenz bereits nach 30 min. Diese intensivierten sich bereits nach 1 Zyklus sehr stark (flächige Bildung von rot-braunem Rost auf dem Stahlblech). Prüfkörper, welche mit der beschriebenen anhydridhaltigen Folie verpackt wurden, zeigten auch nach 29 Zyklen keinerlei Anzeichen von Korrosion.

Zur Prüfung des Korrosionsschutzes von Zink wurden Metallprüfkörper aus verzinktem Stahl entweder in direkten Kontakt mit einer Folie verpackt oder in der Mitte eines Distanzrahmens als Träger fixiert. Dieser Rahmen wurde dann mit der VCI-haltigen Folie komplett verpackt. Die Proben wurden einem unter DIN EN 60028-2-30 beschriebenen zyklischen Klimatest unterworfen. Hierbei zeigte sich, dass die VCI-freie Referenz bereits nach 5 Zyklen deutliche Weißrostflecken auswies, während die anhydridhaltige Folie auch nach 29 Zyklen unter diesem harschen Klima keine oder nur sehr geringe Spuren von Weißrost zeigte. Dies beweist den sehr guten Schutz einer der erfindungsgemäßen Folien auch für Zink.

Der beschriebene Korrosionsschutztest im Distanzrahmen wurde ebenso mit einem Prüfkörper aus Aluminium durchgeführt. Auch in diesem Fall wurden nach 29 Zyklen keine Verfärbungen oder sonstige Veränderungen an der Oberfläche sichtbar. Eine VCI-freie Referenz und eine Referenz, welche Caprylsäure beinhaltet, zeigten im Unterschied dazu deutlich sichtbare flächig verteilte weiße Stellen, welche vermutlich auf eine chemische oder morphologische Modifikation der an der Oberfläche stets vorhandenen oxidierten Aluminiumschicht zurückzuführen ist.

### Beispiel 2:

Masterbatche der unter Beispiel 3 genannten Zusammensetzung wurden statt in Polyethylen jeweils in alternativen Polymeren, welche zur Extrusion eines Masterbatches geeignet sind, extrudiert: Ethylenbutylacrylat-Copolymer, Ethylene-Octene-Copolymer, Styrol-Butadien-Copolymer, Polypropylen, Ethylen-Propylen-Blockcopolymer.

Masterbatche dieser Art wurden zu einem PE in einer Dosierung von 2,5% hinzugegeben. Alle diese so erhaltenen Folien zeigten guten bis exzellenten Korrosionsschutz über den atmosphärischen Pfad wie über den TL-Test mit frischen sowie 3 Tage und 14 Tage offen gelagerten Folien gezeigt werden konnte.

### Beispiel 3:

Ein Masterbatch mit der Zusammensetzung
15% Naphtalsäureanhydrid
1,5% AT168
0,75% AT1010
82,75% LDPE
wurde mit einer Dosierung von 5% in PE zu einer Folie geblasen. In einem Tauchtest in Wasser innerhalb einer entsprechend gewählten Folie zeigte sich bei Auslagerung in einem feuchten Wechselklima, dass auch die bloße Anwesenheit des Naphthalsäureanhydrides das Blech in der wässrigen Phase zu schützen vermochte und keinerlei Korrosion zu beobachten war.

Dies zeigt, dass in Wasser gelöstes Anhydrid, welches zu seiner Dicarbonsäure zu hydrolysieren vermag hier, als Kontaktinhibitor wirken kann. Im oberen Teil eines VCI-freien PE-Beutels hingegen war das Stahlblech bereits merklich korrodiert, da offensichtlich weder das im Wasser gelöste Anhydrid noch die entsprechende Dicarbonsäure einen hinreichend hohen Dampfdruck haben, um hier über den atmosphärischen Pfad schützen zu können.

### Beispiel 4:

15% Naphtalsäureanhydrid
10% Kaliumsorbat oder 10% Natriumpelargonat oder 10% Natriumdecanoat
1,5% AT168
0,75% AT1010

Masterbatche der obigen Zusammensetzung wurden zu einem PE in einer Dosierung von 2,5% hinzugegeben. Eine Folie, welche insgesamt 0,25% Natriumpelargonat enthielt, zeigte sowohl frisch, als auch nach Alterung durch offene Lagerung im entfalteten Zustand nach 3 Tagen und 14 Tagen noch guten bis exzellenten Korrosionsschutz von Stahl im Test nach TL 8135-0002.

### Beispiel 5:

15% Naphtalsäureanhydrid
30% Natriumcaprylat
55% PE-Wachs (Ceretan ME 1430, unpolar) oder oxidiertes PE-Wachs (CWO-308)
wurden innig miteinander gemischt. 500 mg des Pulvergemisches wurden bei einer Belastung von 10 t zu einem Pressling mit 10 mm Durchmesser geformt. Die Presslinge wurden in Tyvek-Beutel eingeschweißt und sowohl 1 Tag bei Raum-Klima (Bedingungen wie in Beispiel 1) als auch 3 Tage unter einem zyklischem Übersee-Klima (DIN EN 60028-2-30) konditioniert bzw. gealtert. Anschließend wurden diese Proben nach TL 8135-0002 hinsichtlich des Korrosionsschutzes überprüft. Es zeigte sich, dass alle Proben unabhängig von der Alterung einen exzellenten Korrosionsschutz aufwiesen, während ein wirkstofffreier Wachs-Pressling auch im ungealterten Zustand keinerlei Korrosionsschutz aufwies.

### Beispiel 6:

Aus Gemischen von
a) 1% 1,8-Naphtalsäureanhydrid
   15% Natriumcaprylat
   3% Natriumbenzoat
   0,75% AT168
   0,375% AT1010
   79,875% PE
   sowie
b) 9% 1,8-Naphtalsäureanhydrid
   2% Natriumcaprylat
   0,75% AT168
   0,375% AT1010
   87,875% PE
wurden Masterbatche extrudiert. Zur Herstellung einer mehrschichtigen Folie wurde in einem 3-Schicht-Coextruder eine 3-schichtige Polyethylenfolie extrudiert, wobei deren Innenschicht 40 µm aufwies und ausschließlich Masterbatch b) mit einer Konzentration von 5 % in diese mittlere Schicht zudosiert wurde. Die beiden Außenschichten waren jeweils 20 µm dick und bei diesen wurde ausschließlich Masterbatch a) mit einer Konzentration von jeweils 5% zudosiert.

Stücke einer solchen Folie wurde zur Alterung einer klimatischen Belastung von 55°C bei 35% rel. Luftfeuchte ausgesetzt. Nach bestimmten Zeiten wurde jeweils ein Stück entnommen, die Folie extrahiert und der Inhibitorgehalt des Eluates mittels GC-MS bestimmt. Dieses Vorgehen erlaubt die Bestimmung des restlichen Inhibitorgehaltes in der Folie nach Alterung.

Aus der folgenden Tabelle ist ersichtlich, dass die Folie auch unter den harschen Bedingungen nach einem erwarteten, stärkeren initialen Abfall der Natriumcaprylatkonzentration konstant und vergleichsweise langsam über mindestens 72 h Inhibitor verliert.

**Tab. 1**

| Dauer Alterung bei 55°C, 35%LF [h] | Rel. Inhibitorgehalt |
|---|---|
| 0 | 100 |
| 2 | 80,7 |
| 4 | 78,4 |
| 8 | 71,5 |
| 24 | 68 |
| 72 | 47,5 |

## Patentansprüche

1. Stoffkombination zur stimulus-abhängigen Freisetzung von Dampfphasenkorrosionsinhibitoren, welche mindestens enthält:
(1) eine Matrix, insbesondere eine Polymermatrix oder ein Polyolefin-Wachs oder oxidiertes Polyolefinwachs,
(2) mindestens ein symmetrisches oder asymmetrisches Carbonsäureanhydrid von mindestens einer ersten Carbonsäure, welche keine leichtflüchtige Carbonsäure ist,
(3) mindestens ein Salz, insbesondere ein Alkali- oder Erdalkalisalz, von mindestens einer zweiten, leichtflüchtigen korrosionsinhibierenden Carbonsäure mit einem Dampfdruck von mindestens 1,3 x 10⁻⁵ Pa bei 25°C, vorzugsweise mindestens 1 x 10⁻⁴ oder 1 x 10⁻³ Pa, bei 25°C,
wobei das Carbonsäureanhydrid der Komponente (2) ein nicht-flüchtiges oder schwerflüchtiges Anhydrid mit einem Dampfdruck von vorzugsweise niedriger als 1 x 10⁻³ Pa bei 25° C ist,
und wobei die Stoffkombination in der Lage ist, bei Einwirkung des erforderlichen Stimulus, d.h. Gegenwart von H₂O, die erste(n) Carbonsäure(n) durch Hydrolyse des Anhydrids freizusetzen und die mindestens eine zweite Carbonsäure der Komponente (3) durch Protonentransfer von mindestens einer ersten Carbonsäure aus ihrem Salz freizusetzen,
so dass mindestens eine korrosionsinhibierende leichtflüchtige Carbonsäure der Komponente (3) als Korrosionsinhibitor in der Dampfphase vorliegt.

2. Stoffkombination gemäß Anspruch 1, wobei das Carbonsäureanhydrid ein cyclisches Anhydrid darstellt oder umfasst, welches von einer Dicarbonsäure, die einen 5-, 6- oder 7-gliedrigen Ring bilden kann, gebildet wird.

3. Stoffkombination gemäß einem der Ansprüche 1-2, wobei das Carbonsäureanhydrid aus der Gruppe ausgewählt ist, welche Myristinsäureanhydrid, Naphthalsäureanhydrid, insbesondere 1,8-Naphthalsäureanhydrid, 2,3-Naphthalsäureanhydrid und 1,4,5,8-Naphthalintetracarbonsäureanhydrid, Diphensäureanhydrid, Isatosäureanhydrid, Pyromellitsäureanhydrid, Mellitsäureanhydrid oder asymmetrische gemischte Anhydride der genannten Carbonsäuren umfasst.

4. Stoffkombination gemäß einem der Ansprüche 1-3, wobei die mindestens eine erste Carbonsäure der Komponente (2) einen Dampfdruck von niedriger als 1 x 10⁻³ Pa bei 25°C, vorzugsweise niedriger als 1 x 10⁻⁴ Pa oder niedriger als 1,3 x 10⁻⁵ Pa, aufweist.

5. Stoffkombination gemäß einem der Ansprüche 1-4, wobei die mindestens eine zweite Carbonsäure der Komponente (3) aus der Gruppe ausgewählt ist, welche gesättigte und ungesättigte unsubstituierte Alkansäuren mit 6-14 Kohlenstoffatomen, gesättigte und ungesättigte Alkansäuren mit 3-6 Kohlenstoffatomen, welche Amino- und/oder Hydroxylsubstituenten tragen, sowie aromatische oder heteroaromatische Carbonsäuren mit 6-14 Kohlenstoffatomen, insbesondere Benzoesäure, alkylsubstituierte Benzoesäure-Derivate, wie ortho-, meta- und para-Toluolsäure, Amino- und/oder Hydroxy-substituierte Benzoesäure-Derivate, Furan-2-Carbonsäure oder Furan-3-Carbonsäure, umfasst.

6. Stoffkombination gemäß einem der Ansprüche 1-5, wobei die Matrix der Komponente (1) eine Polymermatrix ist, die ein oder mehrere Polymere enthält, welche(s) aus der Gruppe ausgewählt ist/sind, die polyolefinische Polymere, insbesondere Polyethylen, Polypropylen, Ethylenvinylacetat (EVA), Ethylen-Butylacrylat-Copolymer (EBA), Ethylen-Octen-Copolymer, Ethylen-Propylen-Copolymer, Styrolpolymere, insbesondere Polystyrol, Styrol-Butadien-Copolymer, Polyamide, Polyurethane, Polyester, Polyvinylchlorid, und biologisch abbaubare Polymere, insbesondere Polylactide und Polybutylenadipatterephtalat, Polyhydroxybuttersäure, umfasst.

7. Stoffkombination gemäß einem der Ansprüche 1-5, wobei die Matrix der Komponente (1) ein Polyolefin-Wachs oder oxidiertes Polyolefin-Wachs, vorzugsweise ein Polyethylenwachs mit einer mittleren Molmasse von 3500-10.000 g/mol oder ein oxidiertes Derivat eines solchen Polyethylenwachses, insbesondere mit einer Säurezahl von 0-20, ist.

8. Stoffkombination gemäß einem der Ansprüche 1-7, welche neben den Komponenten (1) bis (3) zusätzlich noch weitere Zusatz- oder Hilfsstoffe, insbesondere bereits als Korrosionsinhibitoren, vorzugsweise Dampfphasenkorrosionsinhibitoren, eingeführte Substanzen, insbesondere Triazole oder leichtflüchtige korrosionsinhibierende Carbonsäuren mit einem Dampfdruck von mindestens 1,3 x 10⁻⁵ Pa, vorzugsweise mindestens 1 x 10⁻³ Pa, bei 25°C, einzeln oder als Gemisch derselben, enthält.

9. Stoffkombination gemäß einem der Ansprüche 1-8, insbesondere zur Verwendung als Masterbatch, falls die Matrix eine Polymermatrix ist, oder zur Verwendung als Pulvermischung bzw. Pressling, falls die Matrix ein Wachs ist, welche Stoffkombination Komponente (1) mit einem Anteil im Bereich von 55 bis 99,5 Gew.- %, bzw. mit einem Anteil im Bereich von 10 bis 99.5 Gew.-% falls es sich um ein Wachs handelt und die Stoffkombination nicht extrudiert werden muss, enthält,
Komponente (2) mit einem Anteil im Bereich von 100 bis 300.000 ppm, bzw. mit einem Anteil im Bereich von 100 bis 400.000 ppm falls es sich bei Komponente (1) um ein Wachs handelt und die Stoffkombination nicht extrudiert werden muss, vorzugsweise 1000 bis 200.000 ppm, bevorzugter 50.000 bis 200.000 ppm und noch bevorzugter 50.000 bis 150.000 ppm, enthält,
Komponente (3) mit einem Anteil im Bereich von 2.000 ppm bis 300.000 ppm, bzw. mit einem Anteil im Bereich von 2.000 ppm bis 800.000 ppm falls es sich bei Komponente (1) um ein Wachs handelt und die Stoffkombination nicht extrudiert werden muss, vorzugsweise 10.000 bis 300.000 ppm, bevorzugter 20.000 bis 200.000 ppm und noch bevorzugter 100.000 bis 200.000 ppm, enthält,
und gegebenenfalls weitere Zusatz- oder Hilfsstoffe mit einem Anteil im Bereich von 10 bis 100.000 ppm, vorzugsweise 1000 ppm bis 100.000 ppm, bevorzugter 20.000 bis 100.000 ppm enthält,
jeweils bezogen auf die Gesamtmenge der Stoffkombination.

10. Stoffkombination gemäß einem der Ansprüche 1-9, welche
Komponente (1) mit einem Anteil im Bereich von 95 bis 99,95 Gew.- % enthält, Komponente (2) mit einem Anteil im Bereich 10 bis 30.000 ppm, vorzugsweise 600 bis 15.000 ppm, noch bevorzugter 1000 ppm bis 8000 ppm, enthält,
Komponente (3) mit einem Anteil im Bereich 10 ppm bis 30.000 ppm, vorzugsweise 1.000 bis 25.000 ppm, noch bevorzugter 2000 bis 8000 ppm, enthält, und gegebenenfalls weitere Zusatz- oder Hilfsstoffe mit einem Anteil im Bereich von 10 bis 25.000 ppm enthält,
jeweils bezogen auf die Gesamtmenge der Stoffkombination.

11. Stoffkombination gemäß einem der Ansprüche 1-10, welche in Form einer Pulvermischung, eines Presslings, eines extrudierten Stranges, eines Granulats, einer Folie, insbesondere mit einer Dicke im Bereich von 10 bis 400 µm, oder eines anderen Formkörpers, oder als Komponente in einem Kompositmaterial, insbesondere als Verbundfolie oder Laminat auf einem Trägermaterial, vorliegt.

12. Stoffkombination gemäß Anspruch 11, welche als zwei- oder mehrschichtige Folie vorliegt, wobei die Schichten unterschiedliche Anteile ihrer Komponenten, insbesondere unterschiedliche Verhältnisse von Komponente (2) zu Komponente (3), aufweisen.

13. Verfahren zur Herstellung einer Stoffkombination gemäß einem der Ansprüche 1-12, wobei die Matrix eine Polymermatrix ist, umfassend mindestens die folgenden Schritte:
- Herstellen einer Mischung, die mindestens a) ein extrusionsfähiges Polymer oder eine extrusionsfähige Polymermischung, b) das Carbonsäureanhydrid der Komponente (2) oder die entsprechende(n) erste(n) Carbonsäure(n), c) das Salz der Komponente (3) umfasst,
- Extrudieren der erhaltenen Mischung bei einer Temperatur im Bereich von 90 bis 250°C zu einem Masterbatch.

14. Verfahren nach Anspruch 13,
umfassend ferner mindestens den folgenden Schritt:
- Weiterverarbeiten des Masterbatches, gegebenenfalls nach Mischen mit einem weiteren extrusionsfähigen Polymer oder einer weiteren extrusionsfähigen Polymermischung, zu einem Endprodukt in einer gewünschten Form, insbesondere einem gewickelten Strang, einem Granulat, einem Spritzgussteil oder einer Folie.

15. Verfahren nach Anspruch 14, wobei das Masterbatch oder eine Mischung des Masterbatches mit einem weiteren extrusionsfähigen Polymer einer Blasfolienextrusion unterworfen wird, wodurch eine Folie mit einem gewünschten Durchmesser hergestellt wird, oder mittels anderer Verfahren, insbesondere Profil-Extrusion, Spritzguss-Verfahren, Tiefzieh-Verfahren, Blasform-Verfahren, Laminierung, bei Temperaturen von 50 bis 250 °C weiterverarbeitet wird.

16. Verfahren nach Anspruch 14 oder 15, wobei mindestens zwei verschiedene Masterbatches/Polymermischungen, insbesondere mit unterschiedliche Verhältnissen der Komponenten (2) und (3), hergestellt und mittels Coextrusion in unterschiedliche, übereinander liegende Schichten extrudiert werden, die zusammen eine Folie bilden.

17. Verfahren nach einem der Ansprüche 13-16, wobei das Carbonsäureanhydrid *in situ* durch eine Cyclisierungsreaktion von mindestens einer ersten Dicarbonsäure der Komponente (2) bei der Extrusion oder Blasextrusion der zu extrudierenden Mischung bei einer Temperatur im Bereich von 80 bis 250 °C gebildet wird.

18. Verfahren zur Herstellung einer Stoffkombination gemäß einem der Ansprüche 1-11, wobei die Matrix ein Wachs ist, umfassend mindestens die folgenden Schritte:
- Herstellen einer Mischung, die mindestens a) ein Polyolefin-Wachs oder oxidiertes Polyolefin-Wachs, insbesondere ein Polyethylenwachs oder oxidiertes Polyethylenwachs, b) das Carbonsäureanhydrid der Komponente (2) oder die entsprechende(n) erste(n) Carbonsäure(n), und c) das Salz der Komponente (3) umfasst,
- Pressen des Gemisches zu einem Pressling, optional mit kurzzeitigem Erwärmen auf maximal 100°C.

19. Verfahren zur stimulus-abhängigen Freisetzung von Dampfphasenkorrosionsinhibitoren, umfassend:
- Bereitstellung einer Stoffkombination nach einem der Ansprüche 1-12, welche mindestens enthält:
(1) eine Polymermatrix oder ein Polyolefin-Wachs oder oxidiertes Polyolefin-Wachs,
(2) mindestens ein symmetrisches oder asymmetrisches Carbonsäureanhydrid von mindestens einer ersten Carbonsäure, welche keine leichtflüchtige Carbonsäure ist,
(3) ein Salz von mindestens einer zweiten, leichtflüchtigen korrosionsinhibierenden Carbonsäure mit einem Dampfdruck von mindestens 1,3 x 10⁻⁵ Pa bei 25°C, vorzugsweise mindestens 1 x 10⁻⁴ oder 1 x 10⁻³ Pa bei 25°C,
wobei das Carbonsäureanhydrid der Komponente (2) ein nicht-flüchtiges oder schwerflüchtiges Anhydrid mit einem Dampfdruck von vorzugsweise niedriger als 1 x 10⁻³ Pa bei 25° C ist, und
- Hydrolyse des Carbonsäureanhydrids der Komponente (2) in Gegenwart des Stimulus H₂O, wodurch mindestens eine erste Carbonsäure freigesetzt wird und die mindestens eine zweite Carbonsäure der Komponente (3) durch Protonentransfer von mindestens einer ersten Carbonsäure aus ihrem Salz freigesetzt wird,
so dass mindestens eine korrosionsinhibierende leichtflüchtige Carbonsäure der Komponente (3) als Korrosionsinhibitor in der Dampfphase vorliegt.

20. Verwendung einer Stoffkombination gemäß einem der Ansprüche 1-12 zum Korrosionsschutz von üblichen Gebrauchsmetallen innerhalb von Verpackungs-, Lagerungs- und Transportvorgängen, wobei die Gebrauchsmetalle insbesondere aus Eisen, Zink, Chrom, Nickel, Aluminium, Kupfer, Blei, Zinn, Magnesium, Silber und deren Legierungen oder Kombinationen ausgewählt sind.

## Claims

1. A combination of substances for stimulus-dependent release of vapour phase corrosion inhibitors which contains at least:
(1) a matrix, in particular a polymer matrix or a polyolefin wax or oxidised polyolefin wax,
(2) at least one symmetrical or asymmetrical carboxylic acid anhydride of at least one first carboxylic acid which is not a highly volatile carboxylic acid,
(3) at least one salt, in particular an alkali or earth alkali salt, of at least one second, highly volatile corrosion-inhibiting carboxylic acid with a vapour pressure of at least 1.3 x 10⁻⁵ Pa at 25°C, preferably at least 1 x 10⁻⁴ or 1 x 10⁻³ Pa, at 25°C,
wherein the carboxylic acid anhydride of the component (2) is a non-volatile anhydride or anhydride with low volatility with a vapour pressure of preferably lower than 1 x 10⁻³ Pa at 25° C,
and wherein the combination of substances is able, in the case of the action of the necessary stimulus, i.e. presence of H₂O, to release the first carboxylic acid(s) by hydrolysis of the anhydride and release the at least one second carboxylic acid of the component (3) from its salt by proton transfer from at least one first carboxylic acid,
so that at least one corrosion-inhibiting highly volatile carboxylic acid of the component (3) is present as a corrosion inhibitor in the vapour phase.

2. The combination of substances according to Claim 1, wherein the carboxylic acid anhydride represents or comprises a cyclic anhydride which is formed by a dicarboxylic acid which can form a 5-, 6- or 7-membered ring.

3. The combination of substances according to any one of Claims 1-2, wherein the carboxylic acid anhydride is selected from the group which comprises myristic acid anhydride, naphthalic acid anhydride, in particular 1,8-naphthalic acid anhydride, 2,3-naphthalic acid anhydride and 1,4,5,8-naphthalenetetracarboxylic acid anhydride, diphenic acid anhydride, isatoic acid anhydride, pyromellitic acid anhydride, mellitic acid anhydride or asymmetrical mixed anhydrides of the stated carboxylic acids.

4. The combination of substances according to any one of Claims 1-3, wherein the at least one first carboxylic acid of the component (2) has a vapour pressure of less than 1 x 10⁻³ Pa at 25°C, preferably less than 1 x 10⁻⁴ Pa or less than 1.3 x 10⁻⁵ Pa.

5. The combination of substances according to any one of Claims 1-4, wherein the at least one second carboxylic acid of the component (3) is selected from the group which comprises saturated and unsaturated unsubstituted alkanoic acids with 6-14 carbon atoms, saturated and unsaturated alkanoic acids with 3-6 carbon atoms, which bear amino and/or hydroxyl substituents, as well as aromatic or heteroaromatic carboxylic acids with 6-14 carbon atoms, in particular benzoic acid, alkyl-substituted benzoic acid derivatives, such as ortho-, meta- and para-toluic acid, amino- and/or hydroxy-substituted benzoic acid derivatives, furan-2-carboxylic acid or furan-3-carboxylic acid.

6. The combination of substances according to any one of Claims 1-5, wherein the matrix of the component (1) is a polymer matrix which contains one or more polymers which is/are selected from the group which comprises polyolefin polymers, in particular polyethylene, polypropylene, ethylene vinyl acetate (EVA), ethylene butyl acrylate copolymer (EBA), ethylene-octene copolymer, ethylene-propylene copolymer, styrene polymers, in particular polystyrene, styrene-butadiene copolymer, polyamides, polyurethanes, polyesters, polyvinyl chloride, and biodegradable polymers, in particular polylactides and polybutylene adipate terephthalate, polyhydroxybutyric acid.

7. The combination of substances according to any one of Claims 1-5, wherein the matrix of the component (1) is a polyolefin wax or oxidised polyolefin wax, preferably a polyethylene wax with a mean molar mass of 3500-10,000 g/mol or an oxidised derivative of such a polyethylene wax, in particular with an acid value of 0-20.

8. The combination of substances according to any one of Claims 1-7, which additionally contains, alongside the components (1) to (3), still further additives or excipients, in particular substances already introduced as corrosion inhibitors, preferably vapour phase corrosion inhibitors, in particular triazoles or highly volatile corrosion-inhibiting carboxylic acids with a vapour pressure of at least 1.3 x 10⁻⁵ Pa, preferably at least 1 x 10⁻³ Pa, at 25°C, individually or as a mixture of the same.

9. The combination of substances according to any one of Claims 1-8, in particular for use as a masterbatch, if the matrix is a polymer matrix, or for use as a powder mixture or pellet, if the matrix is a wax, which combination of substances
contains component (1) with a ratio in the range from 55 to 99.5 wt%, in particular with a ratio in the range from 10 to 99.5 wt%, if this is a wax and the combination of substances does not have to be extruded,
contains component (2) with a ratio in the range from 100 to 300,000 ppm, in particular with a ratio in the range from 100 to 400,000 ppm, if component (1) is a wax and the combination of substances does not have to be extruded, preferably 1000 to 200,000 ppm, more preferably 50,000 to 200,000 ppm and even more preferably 50,000 to 150,000 ppm,
contains component (3) with a ratio in the range from 2000 ppm to 300,000 ppm, in particular with a ratio in the range from 2000 ppm to 800,000 ppm, if component (1) is a wax and the combination of substances does not have to be extruded, preferably 10,000 to 300,000 ppm, more preferably 20,000 to 200,000 ppm and even more preferably 100,000 to 200,000 ppm, and optionally contains further additives or excipients with a ratio in the range from 10 to 100,000 ppm, preferably 1000 ppm to 100,000 ppm, more preferably 20,000 to 100,000 ppm, in each case relative to the total quantity of the combination of substances.

10. The combination of substances according to any one of Claims 1-9, which contains component (1) with a ratio in the range from 95 to 99.95 wt%,
contains component (2) with a ratio in the range from 10 to 30,000 ppm, preferably 600 to 15,000 ppm, more preferably 1000 ppm to 8000 ppm,
contains component (3) with a ratio in the range from 10 ppm to 30,000 ppm, preferably 1000 to 25,000 ppm, more preferably 2000 to 8000 ppm, and optionally further additives or excipients with a ratio in the range from 10 to 25,000 ppm,
in each case relative to the total quantity of the combination of substances.

11. The combination of substances according to any one of Claims 1-10, which is present in the form of a powder mixture, a pellet, an extruded strand, a granulate, a film, in particular with a thickness in the range from 10 to 400 µm, or another shaped article, or as a component in a composite material, in particular as a composite film or laminate on a carrier material.

12. The combination of substances according to Claim 11, which is present as a two- or multilayered film, wherein the layers have different ratios of their components, in particular different proportions of component (2) to component (3).

13. A method for producing a combination of substances according to any one of Claims 1-12, wherein the matrix is a polymer matrix, comprising at least the following steps:
- producing a mixture which comprises at least a) an extrudable polymer or an extrudable polymer mixture, b) the carboxylic acid anhydride of component (2) or the corresponding first carboxylic acid(s), c) the salt of component (3),
- extruding the obtained mixture at a temperature in the range from 90 to 250°C to yield a masterbatch.

14. The method according to Claim 13,
further comprising at least the following step:
- further processing of the masterbatch, possible after mixing with a further extrudable polymer or a further extrudable polymer mixture, to yield an end product in a desired form, in particular a wound strand, a granulate, an injection-moulded part or a film.

15. The method according to Claim 14, wherein the masterbatch or a mixture of the masterbatch with a further extrudable polymer undergoes blown film extrusion, as a result of which a film with a desired diameter is produced, or is further processed by means of other methods, in particular profile extrusion, injection moulding processes, deep drawing processes, blow moulding processes, lamination, at temperatures of 50 to 250°C.

16. The method according to Claim 14 or 15, wherein at least two different masterbatches/polymer mixtures, in particular with different proportions of components (2) and (3), are produced and extruded by means of coextrusion into different layers which lie on top of one another and jointly form a film.

17. The method according to any one of Claims 13-16, wherein the carboxylic acid anhydride is formed *in situ* by a cyclisation reaction of at least one first dicarboxylic acid of component (2) during extrusion or blowing extrusion of the mixture to be extruded at a temperature in the range from 80 to 250°C.

18. A method for producing a combination of substances according to any one of Claims 1-11, wherein the matrix is a wax, comprising at least the following steps:
- producing a mixture which comprises at least a) a polyolefin wax or oxidised polyolefin wax, in particular a polyethylene wax or oxidised polyethylene wax, b) the carboxylic acid anhydride of the component (2) or the corresponding first carboxylic acid(s), and c) the salt of component (3),
- pressing the mixture to yield a pellet, optionally with brief heating to a maximum of 100°C.

19. A method for stimulus-dependent release of vapour phase corrosion inhibitors, comprising:
- providing a combination of substances according to any one of Claims 1-12, which contains at least:
(1) a polymer matrix or a polyolefin wax or oxidised polyolefin wax,
(2) at least one symmetrical or asymmetrical carboxylic acid anhydride of at least one first carboxylic acid which is not a highly volatile carboxylic acid,
(3) a salt of at least one second, highly volatile corrosion-inhibiting carboxylic acid with a vapour pressure of at least 1.3 x 10⁻⁵ Pa at 25°C, preferably at least 1 x 10⁻⁴ or 1 x 10⁻³ Pa at 25°C,
wherein the carboxylic acid anhydride of component (2) is a non-volatile anhydride or an anhydride with low volatility with a vapour pressure of preferably less than 1 x 10⁻³ Pa at 25° C, and
- hydrolysis of the carboxylic acid anhydride of component (2) in the presence of the stimulus H₂O, as a result of which at least one first carboxylic acid is released and the at least one second carboxylic acid of component (3) is released from its salt by proton transfer from at least one first carboxylic acid,
so that at least one corrosion-inhibiting highly volatile carboxylic acid of component (3) is present as a corrosion inhibitor in the vapour phase.

20. Use of a combination of substances according to any one of Claims 1-12 for corrosion protection of conventional industrially used metals within packing, storage and transport processes, wherein the industrially used metals are selected in particular from iron, zinc, chromium, nickel, aluminium, copper, lead, tin, magnesium, silver and alloys or combinations thereof.

## Revendications

1. Combinaison de substances pour libérer en fonction d'un stimulus des inhibiteurs de corrosion en phase vapeur, laquelle contient au moins :
(1) une matrice, en particulier une matrice polymère ou une cire de polyoléfine ou une cire oxydée de polyoléfine,
(2) au moins un anhydride d'acide carboxylique symétrique ou asymétrique d'au moins un premier acide carboxylique, lequel n'est pas un acide carboxylique aisément volatil,
(3) au moins un sel, en particulier un sel alcalin ou alcalino-terreux, d'au moins un deuxième acide carboxylique d'inhibition de corrosion aisément volatil avec une pression de vapeur d'au moins 1,3 x 10⁻⁵ Pa à 25 °C, de préférence d'au moins 1 x 10⁻⁴ ou 1 x 10⁻³ Pa à 25 °C,
dans lequel l'anhydride d'acide carboxylique du composant (2) est un anhydride non volatil ou difficilement volatil avec une pression de vapeur de préférence inférieure à 1 x 10⁻³ Pa à 25 °C,
et dans laquelle la combinaison de substances est en mesure de libérer sous l'effet du stimulus requis, en d'autres termes en présence de H₂O, le/les premier/premiers acide/acides carboxylique/ carboxyliques par hydrolyse de l'anhydride et de libérer l'au moins un deuxième acide carboxylique du composant (3) par transfert de protons d'au moins un premier acide carboxylique depuis son sel, de telle sorte qu'est présent au moins un acide carboxylique aisément volatil d'inhibition de corrosion du composant (3) en tant qu'inhibiteur de corrosion dans la phase vapeur.

2. Combinaison de substances selon la revendication 1, dans laquelle l'anhydride d'acide carboxylique constitue ou comprend un anhydride cyclique, lequel est formé par un acide dicarboxylique, qui peut former un composé cyclique à 5, 6 ou 7 éléments.

3. Combinaison de substances selon l'une quelconque des revendications 1 - 2, dans laquelle l'anhydride d'acide carboxylique est choisi parmi le groupe, lequel comprend de l'anhydride d'acide tétradécanoïque, de l'anhydride d'acide naphtalique, en particulier de l'anhydride de 1,8-acide naphtalique, de l'anhydride de 2,3-acide naphtalique et de l'anhydride de 1,4,5,8-acide tétracarboxilique de naphtalène, d'anhydride d'acide diphénique, d'anhydride d'acide isatoïque, d'anhydride d'acide pyromellitique, d'anhydride d'acide mellitique ou d'anhydrides mélangés asymétriques desdits acides carboxyliques.

4. Combinaison de substances selon l'une quelconque des revendications 1 - 3, dans laquelle l'au moins un premier acide carboxylique du composant (2) présente une pression de vapeur inférieure à 1 x 10⁻³ Pa à 25 °C, de préférence inférieure à 1 x 10⁻⁴ Pa ou inférieure à 1,3 x 10⁻⁵ Pa.

5. Combinaison de substances selon l'une quelconque des revendications 1 - 4, dans laquelle l'au moins un deuxième acide carboxylique du composant (3) est choisi parmi le groupe, lequel comprend des acides alcano saturés et insaturés non substitués avec 6 - 14 atomes de carbone, des acides alcano saturés et insaturés avec 3 - 6 atomes de carbone, lesquels supportent des substituts amino et/ou hydroxyle, ainsi que des acides carboxyliques aromatiques ou hétéroaromatiques avec 6 - 14 atomes de carbone, en particulier de l'acide benzoïque, des dérivés d'acide benzoïque alkyl-substitués, tels que de l'acide ortho-toluique, méta-toluique et para-toluique, des dérivés d'acide benzoïque amino- et/ou hydroxy-substitués, de l'acide furane-2-carboxylique ou de l'acide furane-3-carboxylique.

6. Combinaison de substances selon l'une quelconque des revendications 1 - 5, dans laquelle la matrice du composant (1) est une matrice polymère, qui contient un ou plusieurs polymères, lequel/lesquels est/sont choisi/choisis parmi le groupe qui comprend des polymères polyoléfiniques, en particulier du polyéthylène, du polypropylène, de l'éthylène-acétate de vinyle (EVA), du copolymère d'éthylène-acrylate de butyle (EBA), du copolymère d'éthylène-octène, du copolymère d'éthylène-propylène, des polymères de styrène, en particulier du polystyrène, du copolymère de styrène-butadiène, des polyamides, des polyuréthanes, des polyesters, du polychlorure de vinyle, et des polymères biodégradables, en particulier des polylactides et du polybutylène adipate téréphtalate, du polyacide hydroxybutyrique.

7. Combinaison de substances selon l'une quelconque des revendications 1 - 5, dans laquelle la matrice du composant (1) est une cire de polyoléfine ou une cire oxydée de polyoléfine, de préférence une cire de polyéthylène avec une masse molaire moyenne de 3 500 - 10 000 g/mol ou un dérivé oxydé d'une cire de polyéthylène de ce type, en particulier avec un indice d'acide de 0 - 20.

8. Combinaison de substances selon l'une quelconque des revendications 1 - 7, laquelle contient, outre les composants (1) à (3), en supplément encore des additifs ou des adjuvants, en particulier des substances déjà introduites en tant qu'inhibiteurs de corrosion, de préférence inhibiteurs de corrosion en phase vapeur, en particulier des triazols ou des acides carboxyliques d'inhibition de corrosion aisément volatils avec une pression de vapeur d'au moins 1,3 x 10⁻⁵ Pa, de préférence d'au moins 1 x 10⁻³ Pa à 25 °C, individuellement ou en tant que mélange de ceux-ci.

9. Combinaison de substances selon l'une quelconque des revendications 1 - 8, en particulier destinée à être utilisée en tant que lot principal, si la matrice est une matrice polymère, ou destinée à être utilisée en tant que mélange pulvérulent ou comprimé si la matrice est une cire, laquelle combinaison de substances contient un composant (1) avec une fraction dans la plage de 55 à 99,5 % en poids, ou avec une fraction dans la plage de 10 à 99,5 % en poids s'il s'agit d'une cire et la combinaison de substances ne doit pas être extrudée,
un composant (2) avec une fraction dans la plage de 100 à 300 000 ppm ou avec une fraction dans la plage de 100 à 400 000 ppm si le composant (1) est une cire et la combinaison de substances ne doit pas être extrudée, de préférence de 1 000 à 200 000 ppm, de manière plus préférée de 50 000 à 200 000 ppm, et idéalement de 50 000 à 150 000 ppm,
un composant (3) avec une fraction dans la plage de 2 000 ppm à 300 000 ppm, ou avec une fraction dans la plage de 2 000 ppm à 800 000 ppm si le composant (1) est une cire et la combinaison de substances ne doit pas être extrudée, de préférence 10 000 à 300 000 ppm, de manière plus préférée de 20 000 à 200 000 ppm et idéalement 100 000 à 200 000 ppm,
et éventuellement d'autres additifs ou adjuvants avec une fraction dans la plage de 10 à 100 000 ppm, de préférence 1 000 ppm à 100 000 ppm, de manière plus préférée de 20 000 à 100 000 ppm,
respectivement par rapport à la quantité totale de la combinaison de substances.

10. Combinaison de substances selon l'une quelconque des revendications 1 - 9, laquelle
contient le composant (1) avec une fraction dans la plage de 95 - 99,5 % en poids,
contient le composant (2) avec une fraction dans la plage de 10 à 30 000 ppm, de préférence 600 à 15 000 ppm, idéalement 1 000 ppm à 8 000 ppm,
contient le composant (3) avec une fraction dans la plage de 10 ppm à 30 000 ppm, de préférence de 1 000 à 25 000 ppm, idéalement de 2 000 à 8 000 ppm, et éventuellement d'autres additifs ou adjuvants avec une fraction dans la plage de 10 à 25 000 ppm,
respectivement par rapport à la quantité totale de la combinaison de substances.

11. Combinaison de substances selon l'une quelconque des revendications 1 - 10, laquelle est présente sous la forme d'un mélange pulvérulent, d'un comprimé, d'un brin extrudé, d'un granulat, d'un film, en particulier avec une épaisseur dans la plage de 10 à 400 µm, ou d'un autre corps moulé ou en tant que composant dans un matériau composite, en particulier en tant que film composite ou stratifié sur un matériau de support.

12. Combinaison de substances selon la revendication 11, laquelle est présente en tant que film à deux couches ou à couches multiples, dans laquelle les couches présentent des fractions différentes de leurs composants, en particulier des rapports différents entre le composant (2) et le composant (3).

13. Procédé de fabrication d'une combinaison de substances selon l'une quelconque des revendications 1 - 12, dans lequel la matrice est une matrice polymère, comprenant au moins les étapes suivantes :
- la fabrication d'un mélange, qui comprend au moins a) un polymère pouvant s'extruder ou un mélange de polymères pouvant s'extruder, b) l'anhydride d'acide carboxylique du composant (2) ou le premier/les premiers acide/acides carboxylique/carboxyliques, c) le sel du composant (3),
- l'extrusion du mélange obtenu à une température dans la plage de 90 à 250 °C en un lot principal.

14. Procédé selon la revendication 13,
comprenant en outre au moins l'étape suivante :
- le traitement ultérieur du lot principal, éventuellement après le mélange avec un autre polymère pouvant s'extruder ou un autre mélange de polymères pouvant s'extruder, en un produit final sous une forme souhaitée, en particulier un brin enroulé, un granulat, une pièce moulée par injection ou un film.

15. Procédé selon la revendication 14, dans lequel le lot principal ou un mélange du lot principal est soumis avec un autre polymère pouvant s'extruder à une extrusion de film par soufflage, ce qui permet de fabriquer un film avec un diamètre souhaité, ou est traité ultérieurement au moyen d'autres procédés, en particulier une extrusion de profilé, un procédé de moulage par injection, un procédé d'emboutissage, un procédé de moulage par soufflage, une stratification, à des températures de 50 à 250 °C.

16. Procédé selon la revendication 14 ou 15, dans lequel au moins deux lots principaux/mélanges de polymères différents sont fabriqués en particulier avec des rapports différents entre les composants (2) et (3) et sont extrudés au moyen d'une coextrusion en différentes couches situées les unes au-dessus des autres, qui forment conjointement un film.

17. Procédé selon l'une quelconque des revendications 13 - 16, dans lequel l'anhydride d'acide carboxylique est formé in situ par une réaction de cyclisation d'au moins un premier acide dicarboxylique du composant (2) lors de l'extrusion ou de l'extrusion par soufflage du mélange à extruder à une température dans la plage de 80 à 250 °C.

18. Procédé de fabrication d'une combinaison de substances selon l'une quelconque des revendications 1 - 11, dans lequel la matrice est une cire, comprenant au moins les étapes suivantes :
- la fabrication d'un mélange, qui comprend au moins a) une cire de polyoléfine ou une cire oxydée de polyoléfine, en particulier une cire de polyéthylène ou une cire oxydée de polyéthylène, b) l'anhydride d'acide carboxylique du composant (2) ou le/les premier/premiers acide/acides carboxylique/carboxyliques correspondant/correspondants, et c) le sel du composant 3),
- le pressage du mélange en un comprimé, en option avec un chauffage de courte durée à 100 °C au maximum.

19. Procédé de libération en fonction d'un stimulus d'inhibiteurs de corrosion en phase vapeur, comprenant :
- la fourniture d'une combinaison de substances selon l'une quelconque des revendications 1 - 12, laquelle contient au moins :
(1) une matrice polymère ou une cire de polyoléfine ou une cire oxydée de polyoléfine,
(2) au moins un anhydride d'acide carboxylique symétrique ou asymétrique d'au moins un premier acide carboxylique, lequel n'est pas un acide carboxylique aisément volatil,
(3) un sel d'au moins un deuxième acide carboxylique d'inhibition de corrosion aisément volatil avec une pression de vapeur d'au moins 1,3 x 10⁻⁵ Pa à 25 °C, de préférence au moins 1 x 10⁻⁴ ou 1 x 10⁻³ Pa à 25 °C,
dans lequel l'anhydride d'acide carboxylique du composant (2) est un anhydride non volatil ou difficilement volatil avec une pression de vapeur de préférence inférieure à 1 x 10⁻³ Pa à 25 °C, et
- l'hydrolyse de l'anhydride d'acide carboxylique du composant (2) en présence du stimulus H₂O, ce qui permet de libérer au moins un premier acide carboxylique et de libérer l'au moins un deuxième acide carboxylique du composant (3) par transfert de protons d'au moins un premier acide carboxylique depuis son sel,
de sorte qu'au moins un acide carboxylique aisément volatil d'inhibition de corrosion du composant (3) est présent en tant qu'inhibiteur de corrosion dans la phase vapeur.

20. Utilisation d'une combinaison de substances selon l'une quelconque des revendications 1 - 12 pour la protection contre la corrosion de métaux employés habituels à l'intérieur d'opérations d'emballage, d'entreposage et de transport, dans laquelle les métaux employés sont choisis parmi le fer, le zinc, le chrome, le nickel, l'aluminium, le cuivre, le plomb, l'étain, le magnésium, l'argent et leurs alliages ou leurs combinaisons.
